# FASCICULE DE BREVET EUROPEEN

(11) **EP 2 221 258 B1**
(45) Date de publication et mention de la délivrance du brevet: **17.08.2011**
(21) Numéro de dépôt: 10152612.7
(22) Date de dépôt: 04.02.2010
(51) Int. Cl.: B65D 85/76, B65D 77/04, B65D 5/20, B65D 5/42

(54) **Récipient notamment pour produits solides ou pâteux, son procédé de fabrication et conditionnement comportant ce récipient et un container le recevant**
Behälter, insbesondere für feste oder pastöse Produkte, Verfahren zu dessen Herstellung und Verpackung enthaltend diesen Behälter und einen zusätzlichen Behälter
Recipient in particular for solid or pasty products, a method for making such packaging and a packaging comprising said recipient and a container

(30) Priorité: 19.02.2009 FR 0900761
(43) Date de publication de la demande: 25.08.2010
(73) Titulaire: BONGRAIN S.A., 78223 Viroflay (FR)
(72) Inventeur: Adeline, Laurence, 24460 Agonac (FR); Hinojosa, Marc, 24430 Coursac (FR)
(74) Mandataire: Bolinches, Michel Jean-Marie

(56) Documents cités:
- FR-A- 2 589 436
- FR-A- 2 854 880
- US-A- 5 564 256

## Description

La présente invention concerne un récipient notamment pour produits solides ou pâteux, son procédé de fabrication et un conditionnement pour un tel produit comportant un récipient le supportant et un container recevant de manière amovible ce récipient. D'une manière générale, l'invention s'applique au conditionnement de tous produits solides ou semi-solides et en particulier à des produits alimentaires tels que des fromages frais ou spécialités fromagères, à titre exemplatif et nullement limitatif.

Il est connu de longue date de conditionner des produits alimentaires dans des récipients souples les supportant qui sont par exemple réalisés en papier, comme décrit dans le document US-A-6 089 446 qui concerne un récipient à gâteaux. Ce récipient présente un fond et une paroi latérale à soufflets pourvue de moyens pour sa rigidification qui s'étendent de manière continue sur toute la périphérie de cette paroi, les soufflets inclus, en vue de le maintenir en position dressée en s'opposant au dépliage du récipient.

Un inconvénient majeur de ce type de récipients est qu'il ne permet pas un accès aisé à son contenu pour le consommateur qui souhaiterait par exemple découper dans de bonnes conditions le produit qu'il contient, du fait que sa paroi latérale ne peut pas être rabattue dans le prolongement de son fond.

le document FR-A-2 854 880, qui est considéré comme l'état de la technique le plus proche, décrit un procédé impliquant le thérmosondage d'une feuille souple sur un flan. Un but de la présente invention est de proposer un récipient notamment pour produits solides ou pâteux qui remédie à cet inconvénient, ce récipient présentant un fond et une paroi latérale qui s'étend à partir du fond et qui intègre des moyens rigides de maintien de la paroi aptes à la maintenir en position redressée par rapport au fond, ces moyens de maintien étant espacés sur la périphérie de la paroi en étant reliés deux à deux entre eux par des moyens souples de dépliage/ redressement de cette paroi qui sont formés par des zones déterminées d'au moins un film souple et qui sont aptes à

permettre le passage réversible de cette paroi de sa position redressée à une position rabattue où elle prolonge le fond de manière plus évasée.

A cet effet, un récipient selon l'invention est tel que ces moyens de maintien sont solidaires de ces moyens de dépliage/ redressement par surmoulage, au moins une matière thermoplastique rigide formant ces moyens de maintien et optionnellement ce fond étant injectée sur ce film souple.

Par « récipient », on entend dans la présente description tout ustensile creux capable de contenir les produits précités, que ce récipient soit utilisé pour supporter ces produits (i.e. avec son fond vers le bas) ou pour les entourer à la manière d'une cloche en étant renversé (i.e. avec son fond vers le haut définissant alors le sommet du récipient).

On notera que ces moyens rigides de maintien permettent de conférer un caractère autoporté au récipient de l'invention dans sa position redressée (i.e. relevée ou repliée), en rigidifiant sa paroi latérale pour maintenir l'angle sensiblement droit ou légèrement obtus qu'elle forme avec le fond du récipient.

Quant aux moyens souples de dépliage/ redressement, ils coopèrent ainsi avec ces moyens de maintien pour l'obtention réversible de cette position rabattue (i.e. déployée, à plat ou légèrement relevée par rapport au fond) permettant un accès commode pour le consommateur au produit en vue de le découper tout en protégeant ce produit en évitant sa chute hors du récipient via ces moyens rigides de maintien. En effet, ces derniers permettent également de maintenir la paroi latérale dans sa position rabattue et évasée, en s'opposant à l'affaissement total de cette paroi notamment lorsque le consommateur tient le récipient ainsi évasé dans sa main.

Dans le cas d'un récipient utilisé en position renversée à la manière d'une cloche, ce récipient coopérant alors optionnellement avec un plateau ou socle pour contenir le produit, on notera que l'obtention de la position rabattue par lesdits moyens souples de dépliage/ redressement peut permettre au consommateur d'accéder latéralement au produit, du fait de l'écartement vers le haut de ladite paroi latérale sensiblement dans le prolongement dudit fond, puis de venir couvrir à nouveau ce produit en repliant cette paroi latérale vers le bas dans la position redressée de celle-ci. Spécifiquement dans le cas d'un produit de type fromage, on peut noter qu'une telle cloche pourrait être en outre adaptée pour exercer une fonction d'affinage de ce produit.

On notera également que ce récipient peut être facilement replié dans sa position redressée après chaque usage, grâce auxdits moyens souples de dépliage/ redressement, et demeurer de manière stable dans cette position sans autre récipient extérieur ou container l'y maintenant.

On notera en outre que la paroi latérale du récipient pourrait se prolonger vers le haut par un ou plusieurs rabat(s) ou venant la fermer au moins en partie à la manière d'un opercule, de sorte que le produit soit non seulement supporté mais encore enveloppé par le récipient de manière étanche ou non.

Selon une autre caractéristique de l'invention, lesdits moyens de maintien peuvent être formés par une multitude de lattes rigides s'étendant sur la périphérie de ladite paroi latérale en alternance avec lesdits moyens de dépliage/ redressement, et ledit au moins un film souple s'étend entre deux lattes adjacentes au contact dudit fond et définit un bord libre de cette paroi en alternance avec les extrémités libres de ces lattes.

Par « lattes », on entend dans la présente description des branches ou pattes identiques ou différentes les unes des autres, qui présentent un contour allongé (par exemple rectangulaire mais pouvant être tout autre) et une surface pouvant être plate ou galbée (par exemple arrondie ou gauchie dans le sens de leur hauteur et/ou de leur largeur). Ces lattes pourraient ainsi avoir des hauteurs, largeurs ou épaisseurs différentes entre elles, avec des épaisseurs de lattes variant par exemple de 0,3 mm à plusieurs mm.

Avantageusement, lesdits moyens de dépliage/ redressement peuvent être fixés auxdites lattes adjacentes en formant des soufflets qui sont repliés vers l'intérieur dans ladite position redressée, dans laquelle les lattes sont sensiblement jointives, et qui sont déployés vers l'extérieur dans ladite position rabattue, dans laquelle les lattes sont espacées les unes des autres.

En variante de ces soufflets, lesdits moyens de dépliage/ redressement pourraient être montés mobiles dans des fentes ménagées dans ces lattes adjacentes, en étant aptes à passer de ladite position redressée où ils sont en partie escamotés dans les lattes, à ladite position rabattue où ils sont en partie extraits de ces lattes.

Selon une autre caractéristique de l'invention, lesdits moyens de dépliage/ redressement peuvent être constitués dudit film souple, de préférence en papier, tissu, nontissé ou en matière thermoplastique déformable, qui est pliable de manière réversible entre deux lattes adjacentes et qui s'étend sur toute la périphérie de ladite paroi latérale en étant solidarisé à intervalles réguliers avec ces lattes. Avantageusement, le film souple peut être solidarisé avec les faces intérieures respectives de ces lattes, lesquelles peuvent être, pour certaines d'entre elles ou pour chacune d'entre elles, articulées sur ledit fond ou bien séparées de ce dernier par ce film souple. Dans ce dernier cas, ce film souple pourrait lui-même exercer la fonction de charnière en étant articulé sur le fond.

Egalement avantageusement, chacune de ces lattes peut présenter une base inférieure articulée sur ledit fond en son bord périphérique via une articulation centrée sur cette base, ledit film souple s'étendant de part et d'autre de chaque articulation au contact de ce fond et de chaque latte.

De préférence, tant ce fond que ces lattes sont constituées d'une même matière thermoplastique rigide injectée pour le surmoulage précité, telle qu'un polystyrène ou un polypropylène, par exemple. On notera toutefois que le fond pourrait être réalisé en une autre matière semi-rigide ou même souple, sans sortir du cadre de l'invention.

Selon une autre caractéristique de l'invention, ce récipient peut avantageusement comporter des moyens de préhension qui sont formés par les extrémités libres respectives d'au moins deux desdites lattes, de préférence opposées sur la périphérie de ladite paroi. Ces moyens de préhension peuvent par exemple former des poignées ou être reliés entre eux pour former une ou plusieurs anse(s) plus ou moins arquées, à la manière d'un panier.

A titre exemplatif et nullement limitatif, ledit fond peut présenter une géométrie circulaire ou carrée, de sorte que ce récipient présente sensiblement une forme de corolle ouverte dans ladite position rabattue. Cependant, des géométries elliptiques, ovales, polygonales (par exemple carrées) ou autres sont également envisageables pour ce fond.

Un conditionnement selon l'invention pour produit alimentaire solide ou pâteux, tel qu'un fromage frais ou une spécialité fromagère, comporte un récipient supportant ce produit tel que défini ci-dessus et un container rigide par exemple de type pot recevant de manière amovible ce récipient, de telle sorte que la paroi latérale du récipient épouse sensiblement la paroi latérale du container dans ladite position redressée, ce récipient étant de préférence réalisé en des matériaux poreux et/ou perforés, en vue de permettre l'égouttage du produit à l'intérieur du container.

Avantageusement, lesdits moyens de maintien peuvent être formés par lesdites lattes rigides perforées s'étendant sur la périphérie de ladite paroi latérale en alternance avec lesdits moyens de dépliage/ redressement, lesquels peuvent alors être formés par au moins un film souple poreux s'étendant sur toute la périphérie dudit fond en étant solidarisé à intervalles réguliers avec lesdites lattes.

On notera que lesdits moyens de préhension formés d'un seul tenant avec ces moyens rigides de maintien du récipient permettent d'extraire facilement ce dernier du container pour le manipuler ou consommer son contenu.

On notera également que ce container recevant le récipient pourvu du produit peut être pourvu d'un organe de fermeture étanche ou non, tel qu'un couvercle monté amovible sur le rebord supérieur du container.

Un procédé de fabrication selon l'invention d'un récipient tel que défini ci-dessus comprend un surmoulage desdits moyens souples de dépliage/ redressement par lesdits moyens rigides de maintien, ce surmoulage étant de préférence réalisé par :
a) la mise en place au fond d'un moule d'un film souple, de préférence en papier, tissu, nontissé ou en matière thermoplastique déformable, qui est destiné à former localement lesdits moyens de dépliage/ redressement,
b) l'injection sur ce film d'au moins une matière thermoplastique rigide destinée à constituer à la fois ledit fond et lesdits moyens de maintien, pour faire adhérer étroitement ce film à ce fond et à ces moyens de maintien, puis
c) l'extraction hors du moule, après refroidissement, du récipient ainsi obtenu.

On notera que ce procédé est de type « IML » (« In Mould Labelling » en anglais pour étiquetage dans un moule), le rôle de l'étiquette que l'on surmoule étant ici tenu par le film souple, à ceci près que toute la surface du film souple n'est pas solidarisée avec les moyens de maintien pour permettre la formation des moyens de dépliage/ redressement.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue de dessus et en perspective d'un récipient perforé selon une exemple de réalisation de l'invention, illustré à plat en vue de sa livraison,
la figure 2 est une vue en perspective d'un récipient selon une variante de la figure 1 dans une position intermédiaire de redressement en comparaison de celle de la figure 1,
la figure 3 est une vue latérale et en perspective du récipient de la figure 2 dans une position finale stable redressée,
la figure 4 est une vue latérale et en perspective du récipient de la figure 3 montré en cours d'insertion, dans cette position redressée, dans un container rigide destiné à le recevoir en épousant ses parois,
la figure 5 est une vue de dessus et en perspective du container de la figure 4 dans lequel a été complètement inséré un récipient non perforé selon l'invention correspondant à une variante des figures 2 et 3,
la figure 6 est une vue de dessus et en perspective du container pourvu du récipient selon la figure 5, dans lequel a été introduit un produit alimentaire, et
la figure 7 est une vue de dessus et en perspective du récipient contenant le produit de la figure 6 après extraction de ce récipient du container puis obtention de sa position rabattue.

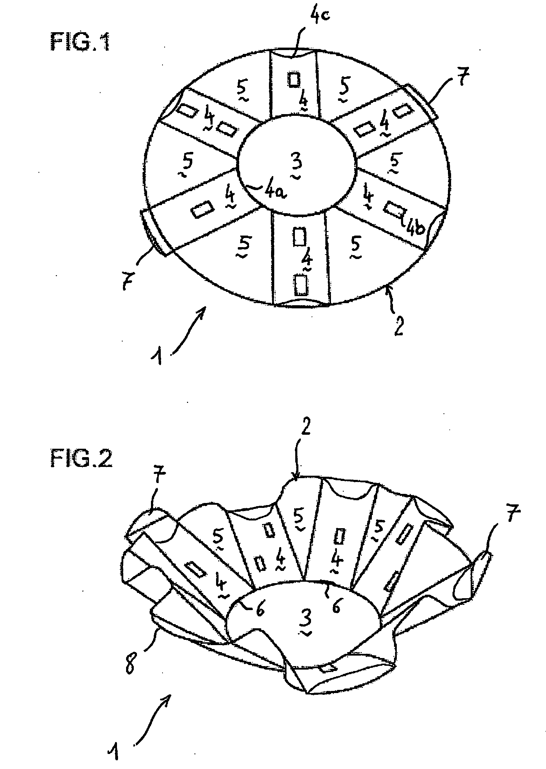

Le récipient 1 selon les figures 1 à 3 présente une structure hybride alternant des parties souples et rigides, étant constitué d'un film souple 2 par exemple en tissu, papier ou autre matière souple, déformable et pliable qui est solidarisé par surmoulage, d'une part, avec la face interne d'un fond 3 du récipient 1 (circulaire dans cet exemple de réalisation) et, d'autre part, avec les faces internes respectives de lattes rigides 4 (oblongues, au nombre de six à la figure 1 et de huit à la figure 2) disposées en étoile autour du fond 3 et séparées deux à deux entre elles par des zones souples 5 de dépliage/ redressement ce film formant dans des soufflets, dans ces exemples préférentiel de l'invention.

On réalise ce surmoulage par une mise en place initiale du film 2 au fond d'un moule à injection, suivi d'une injection sur ce film 2 d'une matière thermoplastique rigide (par exemple en un polystyrène ou polypropylène) destinée à constituer le fond 3 et ces zones souples 5 pour y faire adhérer étroitement ce film 2, puis par extraction du récipient 1 ainsi obtenu hors du moule après refroidissement. On notera que le film 2 peut être réalisé en une matière neutre ou colorée, voire imprimée à la manière d'une étiquette, et que la matière thermoplastique formant les lattes 4 peut présenter une grande variété de teintes et/ou d'effets, comme par exemple une teinte blanc crème avec un effet de relief avec un veinage de type bois pouvant être obtenu par une gravure du moule, à titre non limitatif.

On notera que les matériaux utilisés pour le film 2 et pour les lattes 4 peuvent varier dans une large mesure et sont avantageusement choisis pour être compatibles avec une bonne conservation du produit avec lequel ils sont destinés à être en contact, e.g. un fromage frais ou une spécialité fromagère.

Dans l'exemple des figures 1 à 3, les lattes 4 sont reliées au fond 3 par des articulations 6 formant charnières, qui sont chacune localisées de préférence en une partie centrale de la base inférieure 4a de cette latte 4 de sorte que ces lattes 4 soient sensiblement tangentes au fond 3, et le film souple 2 s'étend latéralement autour de chaque latte 4 et éventuellement de part et d'autre de chaque articulation 6 au contact du fond 3.

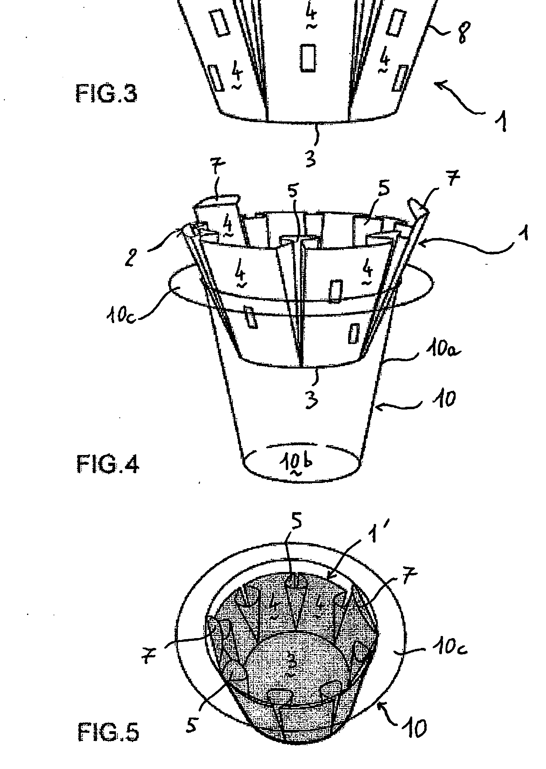

Dans cet exemple de réalisation, chaque latte 4 présente des perforations 4b conçues pour permettre l'écoulement d'un exsudat ou sérum contenu dans le produit alimentaire à disposer dans le récipient 1, tel qu'un fromage frais, par exemple, lequel récipient 1 joue alors le rôle d'une faisselle lorsqu'il est inséré dans un container 10 en forme de pot destiné à le recevoir pour l'égouttage du produit (voir figure 4). Quant au film 2, il peut être choisi poreux ou perforé selon des zones déterminées, en fonction du produit à déposer dans le récipient 1, afin d'absorber une partie du sérum expulsé par le fromage ou spécialité fromagère jusqu'à sa date limite d'utilisation optimale (« DLUO ») ou sa date limite de vente (« DLV »). Cette perméabilité optionnelle du film 2 permet l'évacuation du sérum au fond du container 10.

De plus, plusieurs de ces lattes 4 (deux lattes 4 diamétralement opposées dans l'exemple de ces figures) sont avantageusement munies en leur base supérieure 4c de moyens de préhension 7 du récipient 1 formés dans cet exemple de rabats d'extrémité prolongeant d'un seul tenant les lattes 4 en étant repliés vers l'intérieur du récipient 1, lequel forme ainsi une sorte de panier dont ces rabats 7 facilitent l'insertion dans le container 10 (voir figure 4) et son extraction de ce dernier. On notera que les récipients 1 obtenus suite au moulage peuvent être empilés et livrés à plat (voir figure 1), les rabats 7 étant alors tous orientés dans le même sens.

Le film 2 s'étend sur toute la périphérie de la paroi latérale 8 du récipient 1 en étant solidarisé à intervalles réguliers avec les faces internes respectives des lattes 4, des bases inférieures 4a de celles-ci à une courte distance de leurs bases supérieures 4c, dans l'exemple des figures 1 et 2.

En référence à la position rabattue de la figure 2 et à celle redressée de la figure 3, on voit que les soufflets 5 formés par le film 2 sont pliables de manière réversible entre deux lattes 4, en étant déployés vers l'extérieur (quasiment à plat) dans la position rabattue et en contraire repliés vers l'intérieur du récipient 1 dans la position redressée, dans laquelle les lattes 4 sont ainsi presque jointives. On notera que ces lattes 4 permettent de maintenir à elles seules le récipient 1 dans cette position redressée de la figure 3, lequel est ainsi autoporté (sa paroi latérale 8 présente alors une géométrie légèrement tronconique dans cet exemple).

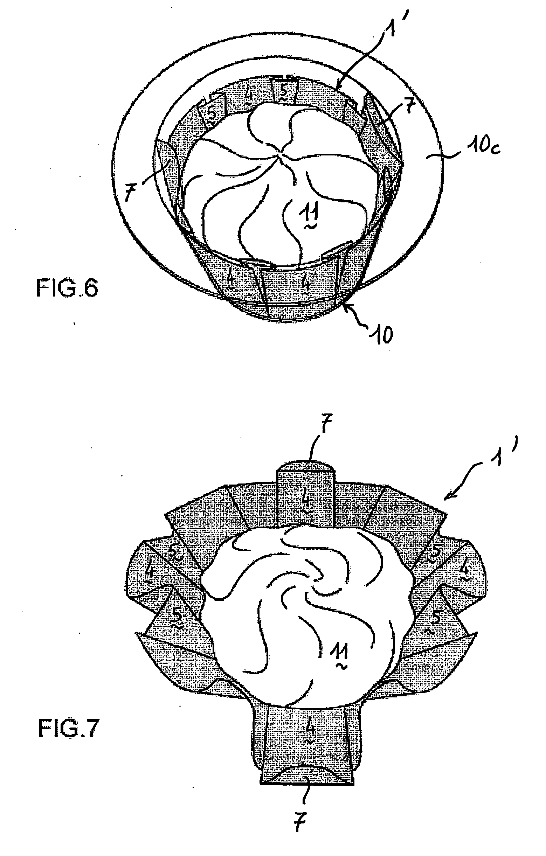

On a illustré à la figure 5 le positionnement d'un autre récipient 1' selon l'invention au fond du container 10 de la figure 4, dans la position redressée de ce récipient 1' qui épouse ainsi la paroi latérale 10a (cylindrique ou légèrement tronconique dans cet exemple) et éventuellement le fond 10b de ce container 10 (un espace de hauteur déterminée pouvant être ménagé entre le fond 3 du récipient 1' et ce fond 10b, par exemple pour la collecte d'un liquide d'égouttage provenant du produit alimentaire 11). La figure 6 montre le résultat de l'opération de dosage de ce produit 11 dans le récipient 1', lequel est ensuite fermé par un couvercle ou par tout autre moyen pour la bonne conservation du produit 11. Dans le cas d'un fromage, celui-ci peut être dosé à une température par exemple comprise entre 4° C et 85 °C, suivant la technologie fromagère employée.

Comme illustré à la figure 7, on accède au produit 11 en extrayant dans un premier temps le récipient 1' du container via les moyens de préhension 7 solidaires de ce récipient 1' qui affleurent ou dépassent du rebord 10c du container 10, puis on procède au dépliage de la paroi latérale 8 du récipient 1' par exemple en écartant l'un de l'autre ces moyens de préhension 7, pour l'obtention de la position rabattue de cette figure 7. Le consommateur peut alors se saisir commodément du produit 11 ou le découper de manière satisfaisante, tout en étant assuré de la protection de ce produit 11 par le récipient 1' même déplié grâce aux lattes 4 qui s'opposent à l'affaissement total de sa paroi latérale 8.

D'une manière générale, il convient de noter qu'un récipient 1, 1' selon l'invention peut être utilisé sans container extérieur 10 le recevant et peut être conçu, de par la surface du film souple 2 disponible, pour conditionner des fromages autres que des fromages frais comme par exemple des fromages à patte molle, la partie supérieure non utilisée du film 2 pouvant être repliée à la surface supérieure du fromage à la manière d'une enveloppe (ce film 2 étant choisi pour présenter une porosité / perméabilité adéquates pour la bonne conservation du fromage).

Enfin et comme indiqué au début de la présente description, on peut noter qu'un récipient selon l'invention peut être utilisé pour supporter tous types de produits pouvant être comestibles ou non et optionnellement préemballés, pouvant même inclure des objets ou articles utilitaires ou décoratifs, et que sa géométrie décrite ci-dessus en référence aux figures 1 à 7 n'est qu'un exemple parmi d'autres et pourrait varier considérablement selon la nature et les dimensions du ou des produits à conditionner.

## Revendications

1. Récipient (1, 1') en particulier pour produits solides ou pâteux (11) présentant un fond (3) et une paroi latérale (8) qui s'étend à partir du fond et qui intègre des moyens rigides de maintien (4) de la paroi aptes à la maintenir en position redressée par rapport au fond, ces moyens de maintien étant espacés sur la périphérie de la paroi en étant reliés deux à deux entre eux par des moyens souples de dépliage/ redressement (5) de cette paroi qui sont formés par des zones déterminées d'au moins un film souple (2) et qui sont aptes à permettre le passage réversible de cette paroi de sa position redressée à une position rabattue où elle prolonge le fond de manière plus évasée, **caractérisé en ce que** ces moyens de maintien sont solidaires de ces moyens de dépliage/ redressement par surmoulage, au moins une matière thermoplastique rigide formant ces moyens de maintien et optionnellement ce fond étant injectée sur ce film souple.

2. Récipient (1, 1') selon la revendication 1, **caractérisé en ce que** lesdits moyens de maintien (4) sont formés par une multitude de lattes rigides s'étendant sur la périphérie de ladite paroi latérale (8) en alternance avec lesdits moyens de dépliage/ redressement (5), et **en ce que** ledit au moins un film souple (2) s'étend entre deux lattes (4) adjacentes au contact dudit fond (3) et définit un bord libre de cette paroi en alternance avec les extrémités libres (4c) de ces lattes.

3. Récipient (1, 1') selon la revendication 2, **caractérisé en ce que** lesdits moyens de dépliage/ redressement (5) sont fixés auxdites lattes (4) adjacentes en formant des soufflets qui sont repliés vers l'intérieur dans ladite position redressée et qui sont déployés vers l'extérieur dans ladite position rabattue.

4. Récipient (1, 1') selon la revendication 2 ou 3, **caractérisé en ce que** lesdits moyens de dépliage/ redressement (5) sont constitués dudit film souple (2), de préférence en papier, tissu, nontissé ou en matière thermoplastique déformable, qui est pliable de manière réversible entre deux lattes (4) adjacentes et qui s'étend sur toute la périphérie de ladite paroi latérale (8) en étant solidarisé à intervalles réguliers avec lesdites lattes.

5. Récipient (1, 1') selon la revendication 4, **caractérisé en ce que** ledit film souple (2) est solidarisé avec les faces intérieures respectives desdites lattes (4), chacune ou certaines d'entre elles étant articulées sur ledit fond (3) ou bien séparées de ce dernier par ce film souple.

6. Récipient (1, 1') selon une des revendications 3 à 5, **caractérisé en ce que** chacune desdites lattes (4) présente une base inférieure (4a) articulée sur ledit fond (3) via une articulation (6) centrée sur cette base, ledit film souple (2) s'étendant de part et d'autre de chaque articulation au contact de ce fond et de chaque latte.

7. Récipient (1, 1') selon une des revendications 2 à 6, **caractérisé en ce qu'**il comporte des moyens de préhension (7) qui sont formés par les extrémités libres (4c) respectives d'au moins deux desdites lattes (4), de préférence opposées sur la périphérie de ladite paroi (8).

8. Récipient (1, 1') selon une des revendications précédentes, **caractérisé en ce que** ledit fond (3) présente une géométrie circulaire ou carrée, de telle sorte que ce récipient présente sensiblement une forme de corolle ouverte dans ladite position rabattue.

9. Conditionnement pour produit alimentaire solide ou pâteux (11), tel qu'un fromage frais ou une spécialité fromagère, comportant un récipient (1, 1') supportant ce produit et un container rigide (10) recevant de manière amovible ce récipient, de telle sorte que la paroi latérale (8) du récipient épouse sensiblement la paroi latérale (10a) du container dans ladite position redressée, **caractérisé en ce que** ce récipient est selon une des revendications précédentes et est de préférence réalisé en des matériaux poreux et/ou perforés, en vue de permettre l'égouttage du produit à l'intérieur du container.

10. Conditionnement selon la revendication 9, **caractérisé en ce que** lesdits moyens de maintien (4) sont formés par des lattes rigides perforées s'étendant sur la périphérie de ladite paroi latérale (8) en alternance avec lesdits moyens de dépliage/ redressement (5), lesquels sont formés par au moins un film souple poreux (2) s'étendant sur toute la périphérie dudit fond (3) en étant solidarisé à intervalles réguliers avec lesdites lattes.

11. Procédé de fabrication d'un récipient (1, 1') selon une des revendications 1 à 8, **caractérisé en ce qu'**il comprend un surmoulage desdits moyens souples de dépliage/ redressement (5) par lesdits moyens rigides de maintien (4), ce surmoulage étant de préférence réalisé par :
a) la mise en place au fond d'un moule d'un film souple (2), de préférence en papier, tissu, nontissé ou en matière thermoplastique déformable, qui est destiné à former localement lesdits moyens de dépliage/ redressement,
b) l'injection sur ce film d'au moins une matière thermoplastique rigide destinée à constituer à la fois ledit fond (3) et des lattes (4) formant lesdits moyens de maintien, pour faire adhérer étroitement ce film à ce fond et à ces lattes, puis
c) l'extraction hors du moule, après refroidissement, du récipient ainsi obtenu.

## Claims

1. A receptacle (1, 1') particularly for solid or pasty products (11) having a bottom (3) and a side wall (8) which extends from the bottom and which incorporates rigid wall retention means (4) capable of keeping it in an upright position relative to the bottom, these retention means being spaced over the periphery of the wall while being connected together in twos by flexible means (5) for unfolding/uplifting this wall which are formed by determined zones of at least one flexible film (2) and which are capable of allowing the reversible transition of this wall from its upright position to a folded-down position in which it extends the bottom in a more fanned-out manner, **characterized in that** these retention means are secured to these unfolding/uplifting means by overmolding, at least one rigid thermoplastic material forming these retention means and optionally this bottom being injected onto this flexible film.

2. The receptacle (1, 1') as claimed in claim 1, **characterized in that** said retention means (4) are formed by a multitude of rigid laths extending over the periphery of said side wall (8) in alternation with said unfolding/uplifting means (5), and **in that** said at least one flexible film (2) extends between two adjacent laths (4) in contact with said bottom (3) and defines a free edge of this wall in alternation with the free ends (4c) of these laths.

3. The receptacle (1, 1') as claimed in claim 2, **characterized in that** said unfolding/uplifting means (5) are attached to said adjacent laths (4) forming bellows that are folded inward in said upright position and which are deployed outward in said folded-down position.

4. The receptacle (1, 1') as claimed in claim 2 or 3, **characterized in that** said unfolding/uplifting means (5) are formed of said flexible film (2), preferably made of paper, cloth, nonwoven or of deformable thermoplastic material, which is reversibly foldable between two adjacent laths (4) and which extends over the whole periphery of said side wall (8) being secured at regular intervals to said laths.

5. The receptacle (1, 1') as claimed in claim 4, **characterized in that** said flexible film (2) is secured to the respective inner faces of said laths (4), each or certain of them being articulated on said bottom (3) or else separated from the latter by this flexible film.

6. The receptacle (1, 1') as claimed in one of claims 3 to 5, **characterized in that** each of said laths (4) has a bottom base (4a) articulated on said bottom (3) via an articulation (6) centered on this base, said flexible film (2) extending on either side of each articulation in contact with this bottom and with each lath.

7. The receptacle (1, 1') as claimed in one of claims 2 to 6, **characterized in that** it comprises gripping means (7) which are formed by the respective free ends (4c) of at least two, preferably opposite, of said laths (4) on the periphery of said wall (8).

8. The receptacle (1, 1') as claimed in one of the preceding claims, **characterized in that** said bottom (3) has a circular or square geometry, so that this receptacle has substantially a shape of an open corolla in said folded-down position.

9. A packaging for a solid or pasty food product (11), such as an unripened cheese or a cheese specialty, comprising a receptacle (1, 1') supporting this product and a rigid container (10) receiving this receptacle in a removable manner, so that the side wall (8) of the receptacle substantially matches the shape of the side wall (10a) of the container in said upright position, **characterized in that** this receptacle is as claimed in one of the preceding claims and is preferably made of porous and/or perforated materials for the purpose of allowing the product to drain inside the container.

10. The packaging as claimed in claim 9, **characterized in that** said retention means (4) are formed by perforated rigid laths extending over the periphery of said side wall (8) in alternation with said unfolding/uplifting means (5), which are formed by at least one porous flexible film (2) extending over the whole periphery of said bottom (3) being secured at regular intervals to said laths.

11. A method for manufacturing a receptacle (1, 1') as claimed in one of claims 1 to 8, which method comprises an overmolding of said flexible unfolding/uplifting means (5) by said rigid retention means (4), this overmolding preferably being carried out by:
a) placing on the bottom of a mold a flexible film (2), preferably made of paper, cloth, nonwoven or of deformable thermoplastic material, which is designed to locally form said unfolding/uplifting means,
b) injecting onto this film at least one rigid thermoplastic material designed to form both said bottom (3) and laths (4) forming said retention means, in order to make this film closely adhere to this bottom and to these laths, then
c) extracting from the mold, after cooling, the receptacle thus obtained.

## Patentansprüche

1. Behältnis (1, 1'), insbesondere für feste oder pastöse Produkte (11), das einen Boden (3) und einen Seitenwand (8) aufweist, die sich von dem Boden aus erstreckt und die starre Haltemittel (4) der Wand einbezieht, die in der Lage sind, diese in der aufgerichteten Position in Bezug auf den Boden aufrechtzuerhalten, wobei die Haltemittel an dem Umfang der Wand beabstandet ist, indem diese jeweils paarweise miteinander durch weiche Mittel (5) zum Umbiegen/Aufrichten dieser Wand verbunden sind, die durch bestimmte Zonen von zumindest einem weichen Film (2) gebildet sind und die in der Lage sind, den reversiblen Übergang dieser Wand von ihrer aufgerichteten Position in eine umgeschlagene Position zu gestatten, wo diese den Boden in einer erweiternderen Weise verlängert, **dadurch gekennzeichnet, dass** die Haltemittel mit diesen Mitteln zum Umbiegen/Aufrichten durch Abformen fest verbunden sind, wobei zumindest ein starres Thermoplastmaterial, dass die Haltemittel und optional den Boden bildet, auf den weichen Film gespritzt ist.

2. Behältnis (1, 1') nach Anspruch 1, **dadurch gekennzeichnet, dass** die Haltemittel (4) von einer Vielzahl an starren Leisten gebildet sind, die sich um den Umfang der Seitenwand (8) abwechselnd mit den Mitteln (5) zum Umbiegen/Aufrichten erstrecken und dass der zumindest eine weiche Film (2) sich zwischen zwei benachbarten Leisten (4) in Kontakt mit dem Boden (3) erstreckt und eine freie Kante dieser Wand abwechselnd mit den freien Enden (4c) dieser Leisten definiert.

3. Behältnis (1, 1') nach Anspruch 2, **dadurch gekennzeichnet, dass** die Mittel (5) zum Umbiegen/Aufrichten an den benachbarten Leisten (4) befestigt sind, indem Bälge gebildet werden, die in der aufgerichteten Position nach innen gefaltet sind und die in der umgeschlagenen Position nach außen ausgebreitet sind.

4. Behältnis (1, 1') nach Anspruch 2 oder 3, **dadurch gekennzeichnet, dass** die Mittel (5) zum Umbiegen/Aufrichten aus dem weichen Film (2), vorzugsweise aus Papier, Gewebe, Nonwovens oder aus verformbarem Thermoplastmaterial, gebildet sind, der zwischen zwei benachbarten Leisten (4) reversibel faltbar ist und der sich über den gesamten Umfang der Seitenwand (8) erstreckt, wobei dieser in regelmäßigen Abständen mit den Leisten fest verbunden ist.

5. Behältnis (1, 1') nach Anspruch 4, **dadurch gekennzeichnet, dass** der weiche Film (2) mit den jeweiligen Innenflächen der Leisten (4) fest verbunden ist, wobei jede oder bestimmte von diesen mit dem Boden (3) gelenkig verbunden sind oder auch von diesem durch den weichen Film getrennt sind.

6. Behältnis (1, 1') nach einem der Ansprüche 3 bis 5, **dadurch gekennzeichnet, dass** die Leisten (4) eine untere Basis (4a) aufweisen, die mit dem Boden (3) über ein Gelenk (6) gelenkig verbunden sind, das an dieser Basis zentriert ist, wobei sich der weiche Film (2) von beiden Seiten jedes Gelenks in Berührung mit diesem Boden und jeder Leiste erstreckt.

7. Behältnis (1, 1') nach einem der Ansprüche 2 bis 6, **dadurch gekennzeichnet, dass** dieser Greifmittel (7) aufweist, die durch die jeweiligen freien Enden (4c) von zumindest zwei der Leisten (4) gebildet sind, vorzugsweise entgegengesetzt an dem Umfang der Wand (8).

8. Behältnis (1, 1') nach einem der vorhergehenden Ansprüche, **dadurch gekennzeichnet, dass** der Boden (3) eine kreisförmige oder quadratische Geometrie in der Weise aufweist, dass das Behältnis im Wesentlichen eine Form einer offenen Krone in der umgeschlagenen Position aufweist.

9. Verpackung für feste oder pastöse Lebensmittelprodukte (11), wie Frischkäse oder eine Käsespezialität, die ein Behältnis (1, 1'), das das Produkt stützt, und einen starren Behälter (10) aufweist, der dieses Behältnis lösbar aufnimmt, in der Weise, dass sich die Seitenwand (8) des Behältnisses im Wesentlichen an die Seitenwand (10a) des Behälters in der aufgerichteten Position anschließt, **dadurch gekennzeichnet, dass** das Behältnis nach einem der vorhergehenden Ansprüche ist und vorzugsweise aus porösem und/oder perforiertem Material im Hinblick auf das Gestatten des Abtropfens des Produktes im Inneren des Behälters umgesetzt ist.

10. Verpackung nach Anspruch 9, **dadurch gekennzeichnet, dass** die Haltemittel (4) durch starre perforierte Leisten gebildet sind, die sich an dem Umfang der Seitenwand (8) abwechselnd mit den Mitteln zum Umbiegen/Aufrichten (5) erstrecken, wobei diese durch zumindest einen weichen porösen Film (2) gebildet sind, der sich über den gesamten Umfang des Bodens (3) erstreckt, wobei dieser in regelmäßigen Abständen mit den Leisten fest verbunden ist.

11. Verfahren zur Herstellung eines Behältnisses (1, 1') nach einem der Ansprüche 1 bis 8, **dadurch gekennzeichnet, dass** dieses ein Abformen der weichen Mittel (5) zum Umbiegen/Aufrichten durch starre Haltemittel (4) aufweist, wobei das Abformen vorzugsweise umgesetzt ist durch:
a) Anbringen eines weichen Films (2), vorzugsweise aus Papier, Gewebe, Nonwovens oder aus verformbarem Thermoplastmaterial, der dazu bestimmt ist, lokal die Mittel zum Umbiegen/Aufrichten zu bilden, am Boden einer Form,
b) Spritzen auf diesen Film von zumindest einem starren Thermoplastmaterial, das dazu bestimmt ist, sowohl den Boden (3) als auch die Leisten (4), die die Haltemittel bilden, zu bilden, damit der Film an diesem Boden und diesen Leisten eng anhaftet, und dann
c) Extrahieren aus der Form nach dem Erkalten des somit erhaltenen Behältnisses.
